# EUROPÄISCHE PATENTANMELDUNG

(11) **EP 4 588 636 A1**
(43) Veröffentlichungstag der Anmeldung: **23.07.2025**
(21) Anmeldenummer: 24152342.2
(22) Anmeldetag: 17.01.2024
(51) Int. Cl.: B28B 1/00, B28B 23/02, B29C 64/194, B33Y 10/00, B33Y 30/00, B33Y 40/00, E04C 5/00, E04G 21/04, B28B 23/00, B21F 1/02

(54) **VORRICHTUNG ZUR EINBRINGUNG EINES BEWEHRUNGSELEMENTES IN EIN BAUTEIL**

(71) Anmelder: Progress Maschinen & Automation AG, 39042 Brixen (IT)
(72) Erfinder: KOSTNER, Markus, 39042 Brixen (IT)
(74) Vertreter: Torggler & Hofmann Patentanwälte - Innsbruck

(57) **Zusammenfassung**

Vorrichtung (1) zur Einbringung wenigstens eines insbesondere stabförmigen Bewehrungselementes (2) in ein Bauteil (3), insbesondere im Zuge eines additiven Fertigungsverfahrens hergestelltes, 3D-gedrucktes Betonbauteil, wobei die Vorrichtung (1) eine Abgabevorrichtung (4) für das wenigstens eine Bewehrungselement (2) umfasst und die Abgabevorrichtung (4) wenigstens eine Aufnahmevorrichtung (5) für das wenigstens eine Bewehrungselement (2) und eine Ausgabevorrichtung (6) zum Ausgeben und Einfügen des wenigstens einen Bewehrungselementes (2) in das Bauteil (3)aufweist, dadurch gekennzeichnet, dass die Abgabevorrichtung (4) zumindest teilweise bewegbar, vorzugsweise schwenkbar gelagert ist und die Ausgabevorrichtung(6) einen Vorschubantrieb (7) umfasst.

## Beschreibung

Die Erfindung betrifft eine Vorrichtung zur Einbringung wenigstens eines insbesondere stabförmigen Bewehrungselementes in ein Bauteil, insbesondere im Zuge eines additiven Fertigungsverfahrens hergestelltes, 3D-gedrucktes Betonbauteil, wobei die Vorrichtung eine Abgabevorrichtung für das wenigstens eine Bewehrungselement umfasst und die Abgabevorrichtung wenigstens eine Aufnahmevorrichtung für das wenigstens eine Bewehrungselement und eine Ausgabevorrichtung zum Ausgeben und Einfügen des wenigstens einen Bewehrungselementes in das Bauteil aufweist.

Derartige Vorrichtungen sind aus dem Stand der Technik bereits bekannt und dienen - in Anlehnung an den klassischen Stahlbetonbau - dazu, bei additiven Fertigungsverfahren die Bewehrung durch Einbringen von Stäben bzw. Drähten in die Druckebene(n) zu realisieren. Dies kann beispielsweise manuell zwischen dem Abfahren von zwei Ebenen erfolgen, wobei bei kleineren Bauteilen gegebenenfalls dafür der Druckprozess unterbrochen werden muss, was sich im Vergleich zu kontinuierlich einbringbaren Bewehrungen als Nachteil darstellt.

Die Erfindung betrifft weiters eine Anordnung zur Einbringung wenigstens eines insbesondere stabförmigen Bewehrungselementes in ein Bauteil, insbesondere im Zuge eines additiven Fertigungsverfahrens hergestelltes, 3D-gedrucktes Betonbauteil, sowie eine 3D-Druckstation mit wenigstens einer Schichtablagevorrichtung zur schichtweisen Ablage wenigstens eines partikelförmigen Zuschlag-stoffs auf wenigstens einer Produktionspalette und wenigstens einem Druckkopf zur gesteuerten Abgabe wenigstens eines Materials, insbesondere eines Bindemittels oder eines Wasser-Bindemittel-Gemischs, umfassend Wasser und wenigstens ein hydraulisches Bindemittel, insbesondere ein zementöses Bindemittel, an wenigstens einem örtlich vorbestimmten Bereich der Produktionspalette und/oder einer auf der Produktionspalette aufgebrachten Lage des Materials und ein Verfahren zum Einbringen von wenigstens einem insbesondere stabförmigen Bewehrungselement in ein mittels eines additiven Fertigungsverfahrens, insbesondere 3D-Druckverfahren, hergestelltes Bauteil, insbesondere 3D-gedrucktes Betonbauteil, wobei in einem ersten Verfahrensschritt mindestens eine Lage eines Materials ausgebracht wird und in einem weiteren Verfahrensschritt wenigstens ein Bewehrungselement mittels einer Vorrichtung in die Lage(n) eingebracht wird.

Ein an der TU Eindhoven entwickelter Druckkopf ermöglicht es, gemeinsam mit der Betonausbringung auch die Bewehrung einzubringen. Dabei wird ein Draht kontinuierlich von einer Vorratsrolle abgespult und über einen direkt am Druckkopf angeordneten Feeder gemeinsam mit dem ausgebrachten Druckmaterial in die Druckebene, und zwar in die Mitte des Betons, eingedrückt.

Als nachteilig an diesem Stand der Technik hat sich neben der Form des Bewehrungselementes, ein glatter dünner Draht, die Limitierung hinsichtlich der Positionierung des eingebrachten Bewehrungselementes herausgestellt. Aufgrund der Anordnung des Feeders direkt am Druckkopf erfolgt die Einbringung des Bewehrungselementes ausschließlich parallel zu den hergestellten Druckebenen. Es können also keine Bewehrungselemente beispielsweise normal zur Druckebene in das Betonbauteil eingebracht werden. Ein zweiter Nachteil bei dieser Vorrichtung der TU Eindhoven besteht darin, dass die kontinuierliche Abspulung des Drahtes von einer Rolle und die Einbringung im Zuge der Herstellung der Druckebenen schlussendlich dazu führt, dass auch an solchen Stellen des gedruckten Betonbauteils Bewehrungselemente eingebracht werden, an denen es aus statischen Gründen gar keine Bewehrung benötigen würde.

In einer Studie der TU Braunschweig zu den Bindungseigenschaften von vertikal eingebrachten kurzen Bewehrungselementen bei additiven Fertigungsverfahren ist die Vision einer gattungsgemäßen Vorrichtung skizziert, bei der aus einem robotergeführten Magazin 4 cm lange Drahtelemente im rechten Winkel zur Druckebene automatisiert in das Betonbauteil eingebracht werden.

Als nachteilig an dieser Vorrichtung hat sich zum einen die sowohl hinsichtlich der Länge als auch des Durchmessers limitierte Größe der einzubringenden Bewehrungselemente und zum anderen die sich durch die Anordnung der großen Anzahl von Bewehrungselementen ergebende Größe des Magazins herausgestellt.

Ausgehend von diesem Stand der Technik hat es sich die Erfindung zur Aufgabe gemacht, unter zumindest teilweiser Vermeidung der vorbeschriebenen Nachteile eine gegenüber dem Stand der Technik verbesserte Vorrichtung zum Einbringen von Bewehrungselementen in ein insbesondere im Zuge eines additiven Fertigungsverfahrens hergestelltes Bauteil anzugeben. Weiters sollen eine gegenüber dem Stand der Technik verbesserte Anordnung zur Einbringung wenigstens eines insbesondere stabförmigen Bewehrungselementes in ein Bauteil, insbesondere im Zuge eines additiven Fertigungsverfahrens hergestelltes, 3D-gedrucktes Betonbauteil, eine verbesserte 3D-Druckstation mit wenigstens einer Schichtablagevorrichtung zur schichtweisen Ablage wenigstens eines partikelförmigen Zuschlagstoffs auf wenigstens einer Produktionspalette und wenigstens einem Druckkopf zur gesteuerten Abgabe wenigstens eines Materials, insbesondere eines Bindemittels oder eines Wasser-Bindemittel-Gemischs, umfassend Wasser und wenigstens ein hydraulisches Bindemittel, insbesondere ein zementöses Bindemittel, an wenigstens einem örtlich vorbestimmten Bereich der Produktionspalette und/oder einer auf der Produktionspalette aufgebrachten Lage des Materials und ein verbessertes Verfahren zum Einbringen von wenigstens einem insbesondere stabförmigen Bewehrungselement in ein mittels eines additiven Fertigungsverfahrens, insbesondere 3D-Druckverfahren, hergestelltes Bauteil, insbesondere 3D-gedrucktes Betonbauteil, wobei in einem ersten Verfahrensschritt mindestens eine Lage eines Materials ausgebracht wird und in einem weiteren Verfahrensschritt wenigstens ein Bewehrungselement mittels einer Vorrichtung in die Lage(n) eingebracht wird, angegeben werden.

Diese Aufgabe wird gelöst durch die Merkmale der Ansprüche 1, 8, 11 und 12.

Zur Lösung dieser Aufgabe sieht die Erfindung in Bezug auf die Vorrichtung vor, dass die Abgabevorrichtung zumindest teilweise bewegbar, vorzugsweise schwenkbar gelagert ist und die Ausgabevorrichtung einen Vorschubantrieb umfasst.

Dadurch, dass die Abgabevorrichtung für sich - also unabhängig vom Druckkopf, mit dem das Material für das Bauteil ausgebracht wird - insbesondere schwenkbar gelagert ist, wird infolge der Entkoppelung der Abgabevorrichtung vom Druckkopf eine sowohl zeitlich als auch räumlich von der Herstellung der Druckebene(n) völlig unabhängige Einbringung der Bewehrungselemente erreicht. Die Verwendung eines Vorschubantriebes ermöglicht dabei eine schlanke Bauweise der Ausgabevorrichtung, was in Kombination mit der schwenkbaren Lagerung der Abgabevorrichtung insgesamt ein automatisiertes bedarfsorientiertes Einbringen der Bewehrungselemente in das Bauteil, und zwar unabhängig von der Ausbringung des Materials, erlaubt.

Wenn gemäß einem vorteilhaften Aspekt der Erfindung, die Aufnahmevorrichtung zur Positionierung von einem ersten einzufügenden Bewehrungselement und wenigstens einem entgegen der Ausgaberichtung axial anschließend angeordneten, zweiten Bewehrungselement ausgebildet ist und die Ausgabevorrichtung derart angeordnet und ausgebildet ist, dass sie am zweiten Bewehrungselement wirksam angreift, sodass der Vorschub des einzufügenden ersten Bewehrungselementes mittels des zweiten Bewehrungselementes erfolgt, kann die Ausgabevorrichtung im Bereich der Ausgabe besonders platzsparend, beispielsweise düsenförmig ausgestaltet sein. Gleichzeitig erlaubt der Umstand, dass der Vorschub des einzufügenden Bewehrungselementes mittels des nächsten, direkt dahinterliegenden Bewehrungselementes erfolgt, eine schnelle Taktung und somit ein rasches Einbringen vieler Bewehrungselemente in kurzer Zeit.

Ein weiteres Ausführungsbeispiel der Erfindung sieht vor, dass die Aufnahmevorrichtung eine Richteinheit zum Begradigen des wenigstens einen Bewehrungselementes umfasst, wobei es sich als besonders vorteilhaft herausgestellt hat, wenn die Abgabevorrichtung eine Schneidevorrichtung zum Ablängen des wenigstens einen Bewehrungselementes aufweist, wobei die Schneidevorrichtung der Ausgabevorrichtung nachgeordnet ist.

Die einzubringenden Bewehrungselemente müssen also nicht vorkonfektioniert, begradigt und auf Länge geschnitten sein. Vielmehr ermöglicht es die Erfindung Bewehrungselemente beispielsweise direkt von einer Haspel abzuspulen, diese im Zuge des Vorschubs mittels der Richteinheit zu begradigen und bedarfsorientiert auf die benötigte Einbringlänge zu schneiden. Die Erfindung stellt also eine Vorrichtung zur Verfügung, mit der Bewehrungselemente direkt von der Spule - ohne die Zwischenschritte einer gesonderten Konfektionierung und/oder Lagerung in einem Magazin - in das Bauteil eingebracht werden können und zwar bedarfsorientiert an den Stellen, an denen es einer Bewehrung für das Bauteil bedarf.

Eine praktische einfach umzusetzende und im Betrieb kaum fehleranfällige Bewegbarkeit der Abgabevorrichtung wird dann recht, wenn gemäß einem weiteren Ausführungsbeispiel der Erfindung die Vorrichtung ein Drehlager, vorzugsweise ein Rotationslager, zur bewegbaren Lagerung der Abgabevorrichtung aufweist.

Dabei spielt es keine wesentliche Rolle, ob die Ausgabevorrichtung und die Aufnahmevorrichtung der Abgabevorrichtung steif miteinander, vorzugsweise als ein die Abgabevorrichtung bildendes Bauteil, verbunden sind und einheitlich bewegbar, vorzugsweise schwenkbar, gelagert sind oder ob gemäß einem alternativen Ausführungsbeispiel die Ausgabevorrichtung und die Aufnahmevorrichtung der Abgabevorrichtung über das Drehlager beweglich miteinander verbunden sind.

Erfindungswesentlich ist der Umstand, dass durch die drehbewegliche, insbesondere schwenkbare Lagerung der Abgabevorrichtung das Einbringen der Bewehrungselemente in das Bauteil unter verschiedensten Einbringungswinkeln ermöglicht wird, sodass die Verstärkung des Bauteiles bzw. die Erhöhung der Tragfähigkeit des Bauteiles gezielt und ohne Überdimensionierung der Bewehrung erfolgen kann.

Dazu sieht ein weiteres, bevorzugtes Ausführungsbeispiel der Erfindung vor, dass das wenigstens eine Bewehrungselement von einem vorzugsweise gerippten Bewehrungsstahl gebildet ist, wobei es sich hinsichtlich der Aufnahmefähigkeit von Zugkräften als besonders günstig herausgestellt hat, wenn das wenigstens eine Bewehrungselement zwischen 10 und 70 cm lang ist und einen Durchmesser zwischen 1,5 und 6 mm, vorzugsweise 3 mm, aufweist.

War es mit den aus dem Stand der Technik bekannten Vorrichtungen beim 3D-Betondruck bisher nur möglich, entweder kurze dünne Bewehrungsstifte normal zu Druckebene oder durchgehende Armierungsdrähte/ -bänder zwischen den Druckebenen einzubringen, ermöglicht die erfindungsgemäße Vorrichtung bei additiven Fertigungsverfahren das Einbringen einer aus dem klassischen Stahlbetonbau bekannten Bewehrung, die sowohl hinsichtlich der Aufnahmefähigkeit von Zugkräften als auch hinsichtlich der Biegefestigkeit den Erfordernissen genügt.

Die Erfindung betrifft weiters eine Anordnung zur Einbringung wenigstens eines insbesondere stabförmigen Bewehrungselementes in ein Bauteil, insbesondere im Zuge eines additiven Fertigungsverfahrens hergestelltes, 3D-gedrucktes Betonbauteil, wobei die Anordnung wenigstens eine erfindungsgemäße Vorrichtung, eine Führungsvorrichtung zum Bewegen der Vorrichtung im Raum und eine Bevorratungseinheit für das wenigstens eine Bewehrungselement umfasst.

Vorteilhafterweise ist vorgesehen, dass die Bevorratungseinheit von einer Haspel gebildet ist, wobei das Abspulen des Bewehrungselementes von der Haspel mittels des Vorschubantriebes der Ausgabevorrichtung erfolgt.

Es wird also die Vorrichtung im Raum zu der Stelle des Bauteiles hinbewegt, an der die Bewehrungselemente eingebracht werden sollen, wobei die schwenkbare Lagerung der Abgabevorrichtung die bedarfsgerechte Einbringung der Bewehrungselemente, gegebenenfalls in unterschiedlichen Winkeln, ermöglicht. Gleichzeitig werden über den Vorschubantrieb der Ausgabevorrichtung die Bewehrungselemente direkt von der Haspel abgespult und der Abgabevorrichtung zugeführt, wodurch sich ein besonders effizientes und zeitsparendes Einbringen der Bewährungselemente ergibt.

Weiters betrifft die Erfindung ein Verfahren zum Einbringen von wenigstens einem insbesondere stabförmigen Bewehrungselement in ein mittels eines additiven Fertigungsverfahrens, insbesondere 3D-Druckverfahren, hergestelltes Bauteil, insbesondere 3D-gedrucktes Betonbauteil, wobei in einem ersten Verfahrensschritt mindestens eine Lage eines Materials ausgebracht wird und in einem weiteren Verfahrensschritt wenigstens ein Bewehrungselement mittels einer Vorrichtung, insbesondere nach einem der Ansprüche 1 bis 7, in die Lage (n) eingebracht wird.

Bei den bisher bekannten Verfahren werden längenkonfektionierte Bewehrungselemente eingebracht, die bereits vor dem Verfahrensschritt des Ausbringens der Lage des Materials bereitgestellt werden. Die Bewehrungselemente werden also abgeschnitten, beispielsweise in einem Magazin zwischengelagert und dann während des Ausbringens des Materials von diesem Zwischenlager mittels der Ausbringvorrichtung in das Bauteil eingebracht.

Aufgabe der Erfindung ist es, ein hinsichtlich der Anzahl der notwendigen Arbeitsschritte und/oder der Einbringgeschwindigkeit verbessertes Verfahren anzugeben.

Dies wird beim erfindungsgemäßen Verfahren dadurch erreicht, dass das wenigstens eine Bewehrungselement in einem weiteren Verfahrensschritt unmittelbar vor dem Einbringen mittels einer Schneidevorrichtung abgelängt wird, wobei es sich für die Reduzierung der benötigten Arbeitsschritte als besonders vorteilhaft herausgestellt hat, wenn das Bewehrungselement der Schneidevorrichtung durch Abspulen von einer Bevorratungseinheit, vorzugsweise einer Haspel, mittels eines Vorschubantriebes zugeführt wird, wobei das Bewehrungselement vor dem Schneiden mittels einer Richteinheit, vorzugsweise Rollenrichtwerk, gerade gerichtet wird.

Mit der Erfindung kann also die Vorkonfektionierung der einzubringenden Bewehrungselemente zur Gänze entfallen, weil ja die Bewehrungselemente in einem Arbeitszug direkt von der Haspel abgespult, gerichtet und auf Länge geschnitten werden.

Weiters kann vorgesehen sein, dass mehrere Bewehrungselemente in das Bauteil eingebracht werden und die beiden Verfahrensschritte, Ausbringen des Materials in Lagen und Einbringen der Bewehrungselemente, unabhängig voneinander, vorzugsweise azyklisch, erfolgen, wodurch beispielsweise Bewehrungselemente unterschiedlicher Längen über mehrere Druckebenen hindurch in das Bauteil eingebracht werden können. Dabei hat es sich für einen raschen Herstellungsprozess als besonders vorteilhaft herausgestellt, wenn das Einbringen der Bewehrungselemente während des Ausbringens des Materials in Lagen erfolgt.

Werden gemäß einem bevorzugten Ausführungsbeispiel der Erfindung wenigstens zwei, vorzugsweise mehrere Bewehrungselemente unterschiedlich orientiert, mit vorzugsweise verschiedenen, jeweils zwischen 0° und 180° liegenden Einbringungswinkeln, in das Bauteil eingebracht, wird erreicht, dass Bewehrungselemente bedarfsorientiert und den statischen Erfordernissen entsprechend in das Bauteil eingebracht werden können.

Weitere Einzelheiten und Vorteile der vorliegenden Erfindung werden anhand der nachfolgenden Figurenbeschreibung unter Bezugnahme auf die in den Zeichnungen dargestellten Ausführungsbeispiele näher erläutert. Darin zeigen:
- Fig. 1a, 1b: schematisch zwei Varianten eines ersten Ausführungsbeispiels einer erfindungsgemäßen Vorrichtung;
- Fig. 2a, 2b: je einen Querschnitt durch Bauteile mit eingebrachten Bewehrungen;
- Fig. 3a, 3b: zwei unterschiedliche Ausführungsbeispiele einer Anordnung zum Einbringen der Bewehrungselemente;
- Fig. 4a, 4b: schematisch das Verfahren zur Einbringung der Bewehrungselemente und
- Fig. 5a, 5b: schematisch den Verfahrensschritt des Ausbringens des Materials in Lagen.

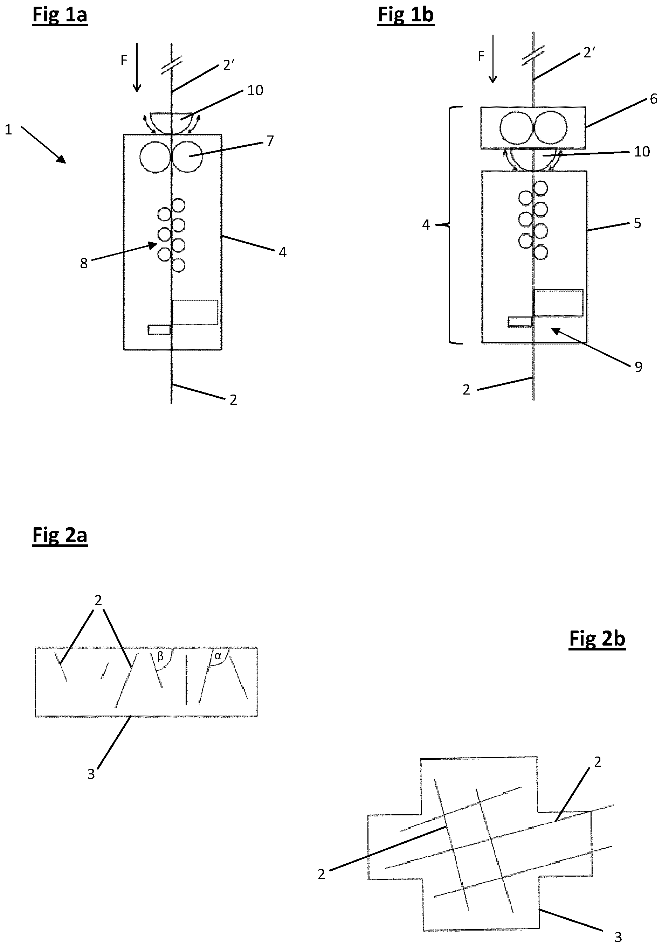

Ein erstes Ausführungsbeispiel der erfindungsgemäßen Vorrichtung 1 ist in den Fig. 1a und 1b in zwei unterschiedlichen Varianten gezeigt. Die Vorrichtung 1 umfasst eine Abgabevorrichtung 4 mit einer Aufnahmevorrichtung 5 und einer Ausgabevorrichtung 6 sowie ein Drehlager 10, wobei sich die dargestellten Varianten gemäß Fig 1a und Fig 1b lediglich durch die Anordnung des Drehlagers 10 unterscheiden.

Bei der in Fig. 1a dargestellten Variante ist die Abgabevorrichtung 4 als einteiliges gehäuseförmiges Bauteil ausgebildet. Im Unterschied dazu sind bei der in der Fig. 1b dargestellten Variante die Aufnahmevorrichtung 5 und die Ausgabevorrichtung 6, die zusammen die Abgabevorrichtung 4 bilden, getrennt voneinander ausgebildet.

Bei der Variante gemäß Fig. 1a ist die Abgabevorrichtung 4 als einstückiges Bauteil über das Drehlager 10 schwenkbar gelagert. Im Gehäuse der Abgabevorrichtung 4 sind, in Förderrichtung F betrachtet, der Vorschubantrieb 7 der Ausgabevorrichtung 6 sowie die Richteinheit 8 und die Schneidevorrichtung 9 der Aufnahmevorrichtung 5 angeordnet.

Das Bewehrungselement 2, 2' wird mittels des Vorschubantriebes 7 in Förderrichtung F bewegt, wobei es beim Durchlauf durch die Richteinheit 8 geradegerichtet wird und in weiterer Folge mittels der Schneidevorrichtung 9 auf die gewünschte Länge abgeschnitten wird. Das abgelängte Bewehrungselement 2 wird durch Vorschub des Bewehrungselementes 2` aus der Vorrichtung 1 ausgebracht.

Bei der Variante gemäß Fig. 1a wird also die gesamte Abgabevorrichtung 4 über das Drehlager 10 geschwenkt. Bei dieser Variante müssen der Vorschubantrieb 7 und die Durchtrittsöffnung für das Bewehrungselement 2' im Drehlager 10 derart ausgewählt und ausgestaltet sein, dass der Vorschub des Bewehrungselementes 2' auch in verschwenkter Lage der Abgabevorrichtung 4 kontinuierlich erfolgen kann. Dieser Umstand kann bei größeren Schwenkwinkeln durchaus eine Herausforderung darstellen, weil ja der Vorschubantrieb 7 das Bewehrungselement 2` nach dem Knickpunkt angreift und daher das Bewehrungselement 2` sozusagen durch die Durchtrittsöffnung des Drehlagers 10 ziehen muss.

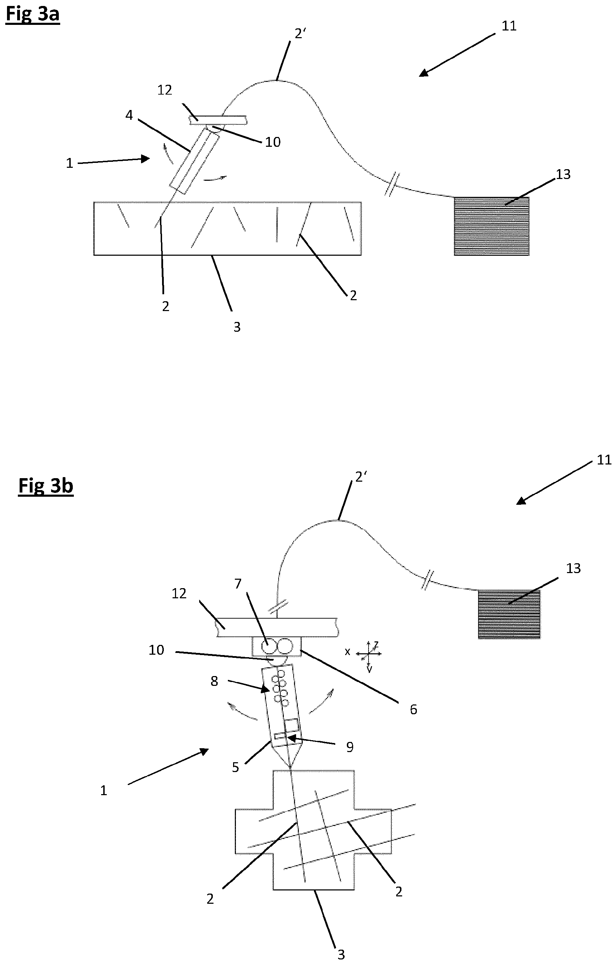

Im Unterschied dazu greift bei der Variante nach Fig. 1b der Vorschubantrieb 7 der Ausgabevorrichtung 6 in verschwenktem Zustand der Abgabevorrichtung (siehe Fig. 3b) vor dem Knickpunkt an das Bewehrungselement 2` an, sodass das Bewehrungselement 2' durch das Drehlager 10 geschoben und nicht - wie bei der Variante nach Fig. 1a - gezogen wird.

Dies wird durch die zweiteilige Ausführung der Abgabevorrichtung 4 erreicht, die bei der Variante nach Fig. 1b die gehäuseförmige Ausgabevorrichtung 6 und die gehäuseförmige Ausnahmevorrichtung 5, die miteinander über das Drehlager 10 schwenkbar verbunden sind, umfasst. Dabei ist der Vorschubantrieb 7 im Gehäuse der Ausgabevorrichtung 6 angeordnet, während das Richtwerk 8 und die Schneidevorrichtung 9 im Gehäuse der Aufnahmevorrichtung 5 angeordnet sind.

Die Abgabe des abgelängten Bewehrungselementes 2 erfolgt analog zur Variante gemäß Fig. 1a durch Vorschub des Bewehrungselementes 2`.

Die Fig. 2a und 2b zeigen einen Querschnitt durch unterschiedliche Bauteile 3 mit eingebrachten Bewehrungen 2. Dabei weist das in Fig. 2a gezeigte Bauteil 3 einen rechteckigen Querschnitt auf, wie dies beispielsweise bei einem plattenförmigen Bauteil 3 der Fall sein kann. Die unterschiedlich langen Bewehrungselemente 2 sind mit unterschiedlichen Einbringtiefen und mit unterschiedlichen Einbringungswinkeln α, β mittels der erfindungsgemäßen Vorrichtung 1 eingefügt worden.

Das in Fig. 2b dargestellte Bauteil 3 weist wiederum einen grundsätzlich rechteckigen Querschnitt allerdings mit einem auskragenden Mittelteil auf. Auch bei diesem Bauteil 3 sind verschieden lange Bewehrungselemente 2 mit unterschiedlichen Einbringungswinkeln α, β angeordnet, wobei im auskragenden Mittelteil die Bewehrungselemente 2 aus dem Bauteil 3 herausragen. Diese überstehenden Abschnitte der Bewehrungselemente 2 dienen bei der Weiterverarbeitung der Bauteile 3 beispielsweise auf einer Baustelle zum Anschluss an anliegende Bauteile.

In den Fig. 3a und 3b sind zwei Ausführungsbeispiele einer erfindungsgemäßen Anordnung 11 zum Einbringen von Bewehrungselementen 2 in Bauteile 3 dargestellt.

Bei dem in Fig. 3a gezeigten Ausführungsbeispiel ist die Abgabevorrichtung 4 der Vorrichtung 1 analog zu der in Fig. 1a dargestellten Variante als einstückiges Bauteil ausgebildet. Die Abgabevorrichtung 4 ist über das Drehlager 10 an der Führungsvorrichtung 12 schwenkbar gelagert. Über die Führungsvorrichtung 12 ist die Vorrichtung 1 im Raum in drei Achsen bewegbar.

Im Betrieb wird also die Vorrichtung 1 mittels der Führungsvorrichtung 12 in die Nähe des Bauteiles 3 gebracht und dann über das Drehlager 10 verschwenkt, sodass die Bewehrungselemente 2 unter dem gewünschten Einbringungswinkel α, β in das Bauteil 3 eingebracht werden können.

Das Einbringen der Bewehrungselemente 2 erfolgt dabei über den Vorschubantrieb 7 der Ausgabevorrichtung 6 und zwar derart, dass die Bewehrungselemente 2' von der Bevorratungseinheit 13, die im gezeigten Ausführungsbeispiel von einer Haspel gebildet wird, direkt abgespult werden und der Richteinheit 8 und in weiterer Folge der Schneidevorrichtung 9 zugeführt werden. Nachdem das einzubringende Bewehrungselement 2 abgeschnitten wurde, wird es mit dem vom Vorschubantrieb 7 vorwärtsbewegten Bewehrungselement 2' vorgeschoben und aus der Vorrichtung 1 ausgebracht beziehungsweise in das Bauteil 3 eingebracht.

Das Ausführungsbeispiel nach Fig. 3b unterscheidet sich vom Ausführungsbeispiel nach Fig. 3a - analog zu der in Fig. 1b dargestellten Vorrichtung 1 - wiederum in der Anordnung des Drehlagers 10. Bei diesem Ausführungsbeispiel ist die Abgabevorrichtung 4 von zwei separaten Bauteilen, nämlich der Ausgabevorrichtung 6 und der Aufnahmevorrichtung 5 gebildet und sind die Ausgabevorrichtung 6 und die Aufnahmevorrichtung 5 über das Drehlager 10 beweglich miteinander verbunden. Die Ausgabevorrichtung 6, die den Vorschubantrieb 7 umfasst, ist an der Führungsvorrichtung 12 angeordnet und ist mittels dieser - analog zu der Fig. 3a dargestellten Anordnung - in drei Achsen bewegbar. Das Zuführen, das Richten, das Schneiden und das Einbringen der Bewehrungselemente 2, 2' in das Bauteil 3 erfolgt analog zum Ausführungsbeispiel gemäß Fig. 3a, weshalb auf eine nochmalige ausführliche Beschreibung verzichtet wird.

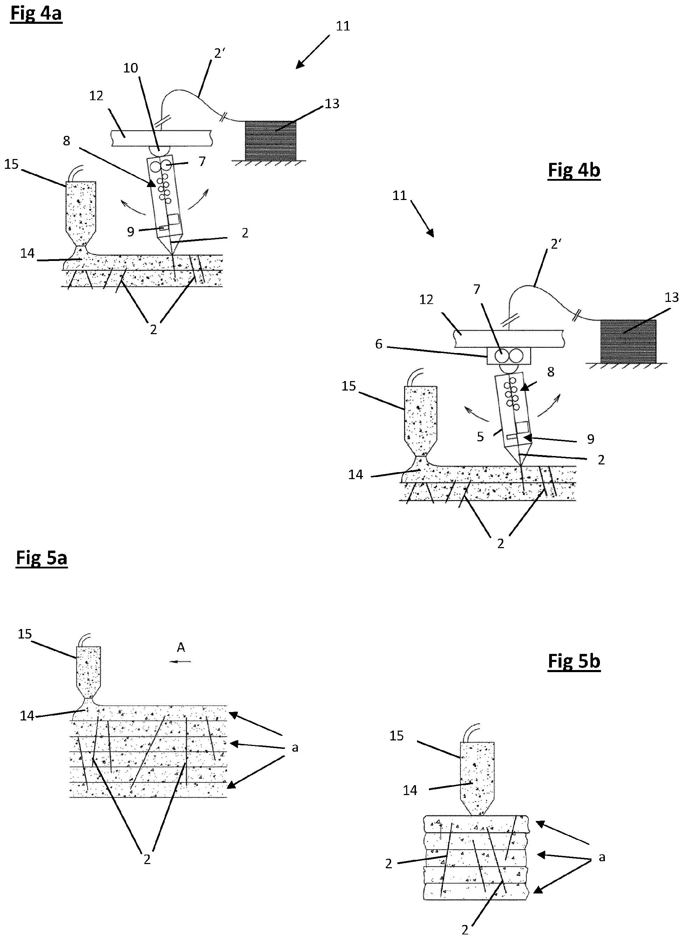

In den Fig. 4a und 4b ist wiederum schematisch das erfindungsgemäße Verfahren zum Einbringen von Bewehrungselementen 2 in Lagen a eines mittels eines 3D-Druckverfahrens ausgebrachten Materials 14 dargestellt. Analog zu den Fig. 1a, 1b und 3a und 3b unterscheiden sich die beiden Ausführungsbeispiele in der Anordnung des Drehlagers 10 der Vorrichtung 1.

In den gezeigten Ausführungsbeispielen wird in einem ersten Verfahrensschritt eine oder mehrere Lagen a des auszubringenden Materials 14 über den Druckkopf 15 ausgebracht. Unabhängig von diesem Ausbringvorgang, aber zeitgleich mit demselben - wird mittels der Anordnung 11 die Vorrichtung 1 dem Druckkopf 15 nachgefahren und werden die Bewehrungselemente 2 bedarfsorientiert - sowohl hinsichtlich der Menge als auch hinsichtlich des benötigen/gewünschten Einbringungswinkels α,β - in die Lagen a eingebracht. Es ist ersichtlich, dass die eingebrachten Bewehrungselemente 2 jeweils knapp über Druckebene der obersten Lage a vorstehen. Diese Überstände der Bewehrungselemente 2 werden beim Ausbringen der nächsten Lage a mit dem auszubringenden Material 14 abgedeckt.

In der Fig. 5a ist ein Längsschnitt in Produktionsrichtung der additiven Fertigungsanlage gezeigt, während in Fig. 5b ein Querschnitt dargestellt ist.

Im gezeigten Ausführungsbeispiel wurde dabei nach fünf ausgebrachten Lagen a des auszubringenden Materials 14 die Bewehrung mit der erfindungsgemäßen Vorrichtung 1 eingebracht bevor die nächsten fünf Lagen a aufgetragen werden und erneut das Einbringen der Bewehrungselemente 2 erfolgt. Es ist wiederum ersichtlich, dass die eingebrachten Bewehrungselemente 2 nach dem Einbringen über die fünfte Lage a vorstehen und mit der nächsten ausgebrachten Lage a mit dem Material 14 abgedeckt werden. Dabei ist lediglich zu beachten, dass die Überstände den Druckkopf 15 beim Ausbringen der nächsten Druckebene nicht behindern.

Aus Fig. 5b ist ersichtlich, dass Bewehrungselemente 2 auch in der Art und Weise eingebracht werden können, dass sie seitlich vorstehen (siehe Fig. 2b), was wiederum dem späteren Anschluss an andere Bauteile dient.

Wenn auch die Erfindung anhand der gezeigten Ausführungsbeispiele konkret beschrieben wurde, versteht sich von selbst, dass der Anmeldungsgegenstand nicht auf diese Ausführungsbeispiel beschränkt ist. Vielmehr sind Maßnahmen und Abwandlungen, die dazu dienen den Erfindungsgedanken umzusetzen, durchaus denkbar und möglich. Beispielsweise kann das Einbringen der Bewehrungselemente auch nach beispielsweise zehn ausgebrachten Lagen erfolgen, der Zeitpunkt hängt jeweils vom Bedarf an einzubringenden Bewehrungen sowie von der Konsistenz des ausgebrachten Materials ab.

### Bezugszeichenliste

- 1: Vorrichtung
- 2: Bewehrungselement
- 3: Bauteil
- 4: Abgabevorrichtung
- 5: Aufnahmevorrichtung
- 6: Ausgabevorrichtung
- 7: Vorschubantrieb
- 8: Richteinheit
- 9: Schneidevorrichtung
- 10: Drehlager
- 11: Anordnung
- 12: Führungsvorrichtung
- 13: Bevorratungseinheit
- 14: Material
- 15: Druckkopf
- F: Förderrichtung
- A: Ausbringrichtung
- α,β: Einbringungswinkel
- a: Lage

## Patentansprüche

1. Vorrichtung (1) zur Einbringung wenigstens eines insbesondere stabförmigen Bewehrungselementes (2) in ein Bauteil (3), insbesondere im Zuge eines additiven Fertigungsverfahrens hergestelltes, 3D-gedrucktes Betonbauteil, wobei die Vorrichtung (1) eine Abgabevorrichtung (4) für das wenigstens eine Bewehrungselement (2) umfasst und die Abgabevorrichtung (4) wenigstens eine Aufnahmevorrichtung (5) für das wenigstens eine Bewehrungselement (2) und eine Ausgabevorrichtung (6) zum Ausgeben und Einfügen des wenigstens einen Bewehrungselementes (2) in das Bauteil (3)aufweist, **dadurch gekennzeichnet, dass** die Abgabevorrichtung (4) zumindest teilweise bewegbar, vorzugsweise schwenkbar gelagert ist und die Ausgabevorrichtung(6) einen Vorschubantrieb (7) umfasst.

2. Vorrichtung nach Anspruch 1, **dadurch gekennzeichnet, dass** die Aufnahmevorrichtung (5) zur Positionierung von einem ersten einzufügenden Bewehrungselement (2) und wenigstens einem entgegen der Ausgaberichtung axial anschließend angeordneten, zweiten Bewehrungselement (2') ausgebildet ist und die Ausgabevorrichtung (4) derart angeordnet und ausgebildet ist, dass sie am zweiten Bewehrungselement (2') wirksam angreift, sodass der Vorschub des einzufügenden ersten Bewehrungselementes (2) mittels des zweiten Bewehrungselementes (2') erfolgt.

3. Vorrichtung nach Anspruch 1, **dadurch gekennzeichnet, dass** die Aufnahmevorrichtung (5) eine Richteinheit (8) zum Begradigen des wenigstens einen Bewehrungselementes (2) umfasst.

4. Vorrichtung nach einem der Ansprüche 1 bis 3, **dadurch gekennzeichnet, dass** die Abgabevorrichtung (4) eine Schneidevorrichtung (9) zum Ablängen des wenigstens einen Bewehrungselementes (2) aufweist, wobei die Schneidevorrichtung (9) der Ausgabevorrichtung (6) nachgeordnet ist.

5. Vorrichtung nach einem der Ansprüche 1 bis 4, **dadurch gekennzeichnet, dass** die Vorrichtung (1) wenigstens ein Drehlager (10), vorzugsweise ein Rotationslager, zur bewegbaren Lagerung der Abgabevorrichtung (4) aufweist, vorzugsweise wobei das wenigstens eine Drehlager (10) dazu ausgebildet ist, die Abgabevorrichtung (4) in einem im Wesentlichen halbkugelförmigen Raumwinkelbereich zu bewegen

6. Vorrichtung nach Anspruch 5, **dadurch gekennzeichnet, dass** die Ausgabevorrichtung (6) und die Aufnahmevorrichtung (5) der Abgabevorrichtung (4) steif miteinander, vorzugsweise als ein die Abgabevorrichtung (4) bildendes Bauteil verbunden sind, und einheitlich bewegbar, vorzugsweise schwenkbar, gelagert sind.

7. Vorrichtung nach Anspruch 5, **dadurch gekennzeichnet, dass** die Ausgabevorrichtung (6) und die Aufnahmevorrichtung (5) der Abgabevorrichtung (4) über das wenigstens eine Drehlager (10) beweglich miteinander verbunden sind.

8. Anordnung (11) zur Einbringung wenigstens eines insbesondere stabförmigen Bewehrungselementes (2) in ein Bauteil (3), insbesondere im Zuge eines additiven Fertigungsverfahrens hergestelltes, 3D-gedrucktes Betonbauteil, wobei die Anordnung (11) wenigstens eine Vorrichtung (1) nach einem der Ansprüche 1 bis 7, eine Führungsvorrichtung (12) zum Bewegen der Vorrichtung (1) im Raum und eine Bevorratungseinheit (13) für das wenigstens eine Bewehrungselement (2) umfasst.

9. Anordnung (11) nach Anspruch 8, **dadurch gekennzeichnet, dass** die Bevorratungseinheit (2) von einer Haspel, die das gespulte Bewehrungselement (2) trägt, gebildet ist, wobei das Abspulen des Bewehrungselementes (2) von der Haspel mittels des Vorschubantriebes (7) der Ausgabevorrichtung (6) erfolgt.

10. Anordnung (11) nach Anspruch 8 oder 9, **dadurch gekennzeichnet, dass** das wenigstens eine Bewehrungselement (2) von einem vorzugsweise gerippten Bewehrungsstahl gebildet ist, vorzugsweise wobei das wenigstens eine Bewehrungselement (2) zwischen 10 und 70 cm lang ist und einen Durchmesser zwischen 1,5 und 6 mm, vorzugsweise 3 mm, aufweist.

11. 3D-Druckstation mit wenigstens einer Schichtablagevorrichtung zur schichtweisen Ablage wenigstens eines partikelförmigen Zuschlagstoffs auf wenigstens einer Produktionspalette und wenigstens einem Druckkopf (15) zur gesteuerten Abgabe wenigstens eines Materials (14), insbesondere eines Bindemittels oder eines Wasser-Bindemittel-Gemischs, umfassend Wasser und wenigstens ein hydraulisches Bindemittel, insbesondere ein zementöses Bindemittel, an wenigstens einem örtlich vorbestimmten Bereich der Produktionspalette und/oder einer auf der Produktionspalette aufgebrachten Lage (a), wobei die 3D-Druckstation wenigstens eine Vorrichtung (1) nach einem der Ansprüche 1 bis 7 oder eine Anordnung (11) nach einem der Ansprüche 8 bis 10 umfasst.

12. Verfahren zum Einbringen von wenigstens einem insbesondere stabförmigen Bewehrungselement (2) in ein mittels eines additiven Fertigungsverfahrens, insbesondere 3D-Druckverfahren, hergestelltes Bauteil (3), insbesondere 3D-gedrucktes Betonbauteil, wobei in einem ersten Verfahrensschritt mindestens eine Lage (a) eines Materials (14) ausgebracht wird und in einem weiteren Verfahrensschritt wenigstens ein Bewehrungselement (2) mittels einer Vorrichtung (1), insbesondere nach einem der Ansprüche 1 bis 7, in die Lage (n) (5) eingebracht wird, **dadurch gekennzeichnet, dass** das wenigstens eine Bewehrungselement (2) in einem weiteren Verfahrensschritt unmittelbar vor dem Einbringen mittels einer Schneidevorrichtung (9) abgelängt wird.

13. Verfahren nach Anspruch 12, **dadurch gekennzeichnet, dass** das Bewehrungselement (2) der Schneidevorrichtung (9) durch Abspulen von einer Bevorratungseinheit (13), vorzugsweise einer Haspel, mittels eines Vorschubantriebes (7) zugeführt wird, wobei das Bewehrungselement (2) vor dem Schneiden mittels einer Richteinheit (8), vorzugsweise Rollenrichtwerk, geradegerichtet wird.

14. Verfahren nach Anspruch 12 oder 13, **dadurch gekennzeichnet, dass** mehrere Bewehrungselemente (2) in das Bauteil (3) eingebracht werden und die beiden Verfahrensschritte, Ausbringen des Materials (14) in Lagen (a) und Einbringen der Bewehrungselemente (2), unabhängig voneinander, vorzugsweise azyklisch, erfolgen.

15. Verfahren nach Anspruch 14, **dadurch gekennzeichnet, dass** das Einbringen der Bewehrungselemente (2) während des Ausbringens des Materials (14) in Lagen (a) erfolgt.

16. Verfahren nach einem der Ansprüche 14 oder 15, **dadurch gekennzeichnet, dass** wenigstens zwei, vorzugsweise mehrere Bewehrungselemente (2) unterschiedlich orientiert, mit vorzugsweise verschiedenen, jeweils zwischen 0° und 180° liegenden Einbringungswinkeln (α,β), in das Bauteil (3) eingebracht werden.
